Europäisches Patentamt

European Patent Office

Office européen des brevets

(11) Publication number: **0 166 035**
A1

## EUROPEAN PATENT APPLICATION

(21) Application number: 84200901.1

(51) Int. Cl.⁴: **F 16 B 2/10**

(22) Date of filing: 21.06.84

(43) Date of publication of application: 02.01.86
Bulletin 86/1

(84) Designated Contracting States: **BE CH DE FR GB LI LU NL**

(71) Applicant: **Intra-Profiel Staalbouwtechniek B.V., Postbus 129, NL-6880 AC Velp (Gld.) (NL)**

(72) Inventor: **Drenth, Haiko, Overtuin 5, NL-7061 DH Terborg (NL)**
Inventor: **Luiten, Jan Willem, Borgscherieten 48, NL-7061 ZR Terborg (NL)**

(74) Representative: **den Boer, Jan Johannes, Ir. et al, Octrooibureau Polak & Charlouis Laan Copes van Cattenburch 80, NL-2585 GD The Hague (NL)**

(54) Rack clamp for securing supporting arms to uprights of cantilever racks.

(57) The rack clamp (4) comprises mouths (5), the jaw inner walls (11, 12) of which extend under an angle relative to eachother in correspondance with the outer surfaces of a flange of an I-section, constituting the upright (1).

The supporting arm (2) has an end plate (3) perpendicular to its web, whereby said arm is clamped to the upright flange. The clamp (4) comprises two identical parts (5) at both sides of the upright, said parts being secured mutually and to the supporting arm (2) by means of a screw (10) and nut.

The wedge shape of the jaws results in a multiplication of the clamping force.

Rack clamp for securing supporting arms to uprights of cantilever racks.

The invention relates to a rack-clamp for stepwise adjustable securing supporting arms to uprights for cantilever racks, said clamp comprising two identical parts, each having a mouth engaging around a flange of the upright, at both sides of the flange, and at equal vertical height, said parts being mutually connectable and connectable to the supporting arm, by means of a screw extending through corresponding holes in the clamp parts and in the supporting arm, and a nut.

The purpose of the invention is to construct such a rack clamp such that the supporting arms are enabled to carry heavy loads, also shock loads, e.g. when the load is placed by a fork truck on the supporting arms. The clamping force should be such that no shifting of the clamp along the upright occurs and that likewise no angular movement occurs between the supporting arm and the upright.

This is achieved according to the invention in that the upright is an I-section and the supporting arm is provided at its end facing the upright with a plate which is parallel to the upright flange, said plate being placed against said flange, the mouth engaging also around said plate and being in engagement therewith, the inner walls of the mouth extending in correspondence with the inner wall of the upright flange and the wall of the plate, i.e. at the flange side under an angle of about $8,5^{\circ}$ with the inner wall at the side of the plate.

Due to the wedge effect of the oblique surfaces, the clamping force perpendicular to the upright flange is equal to a multiple of the tension force occurring in the screw when the nut is tightened. With an inclination angle of $8,5^{\circ}$ (14%) this multiple is about 7.

From the U.S. patent 2,719.629 a rack clamp of this type is known in which the upright comprises two identical halves each having a U-shaped flange around which a jaw of the clamp part engages. Although

0166035

therewith due to a flange surface of the upright extending obliquely relative to the screw direction and due to a correspondingly extending clamp jaw surface, part of the screw tension is converted into an increased friction force between clamp and upright, said force acts on the supporting arm only via the screw hole and the further friction forces on the supporting arm are jointly only equal to the tension force in the screw. A further disadvantage is that special uprights are required and thereby no, cheaper, standard sections may be used.

Furthermore a clamp connection for a T-section to an upright, likewise being a T-section, is known from the German patent 341.604, according to which a portion of the web of the T-section to be used as the supporting arm, which portion is adjacent to the upright, has been removed and the corresponding flange portion parallel to the upright is offset, said flange portion then constituting a plate, such as according to the invention for clamping the supporting arm to the upright. However, the clamp has mutually parallel jaw surfaces so that the above mentioned wedge effect does not occur. The resistance of the clamp against vertical shifting is exclusively based on a narrow clearance with the upright flange and the head plate of the supporting arm and is insufficient, particularly since the clamp also must be permitted to be slid around the parts to be connected. The clamping force on the web of the supporting arm is only equal to the tension force in the screw.

The clamp according to the invention is manufactured in different dimensions, dependent on the used size of the upright section. However, a single type may be used for some successive upright sections, e.g. one for IP 16-22 and one for IP 24-28. Therewith the clamp mouth becomes deeper engaged around the upright when it is a section placed lower in the series.

In order to achieve complete engagement of the clamp jaw inner walls it is advantageous if each clamp part is provided at the end of the surface, which faces the supporting arm when the clamp is mounted, opposite to the end having the clamp mouth parts, with an embossment adapted for engagement with the supporting arm. In that case the clamp may pivot somewhat around the embossment which is in engagement with the supporting arm web.

An adaptation to the different upright section sizes is also achieved by varying the thickness of the head plate of the supporting arm.

In order to increase the pression per unit of surface and therefore the friction between the clamp and the upright preferably each clamp part comprises two identical mouth portions, having a mutual spacing which is substantially equal to the supporting arm height and between which portions the screw hole is provided. The most important purpose of the two clamp part portions which are shaped as reinforcement ribs is to create a maximum strength of the clamp and simultaneously they serve for universal applicability of the clamp, left hand and right hand. The embodiment having two clamp part portions also permits a saving of material and a decrease of the weight of the clamp.

For increasing the friction it is likewise usefull if in one or both clamp part inner walls parallel grooves are provided.

The invention will hereunder be explained with reference to the drawing showing an embodiment, given as an example, of the clamp according to the invention.

Fig. 1 shows a prespective view of an upright with a supporting arm secured thereto by means of a clamp according to the invention.

Fig. 2 shows a plan view of the connection according to figure 1.

Fig. 3 is a horizontal section through the axis of the screw hole of a single clamp part.

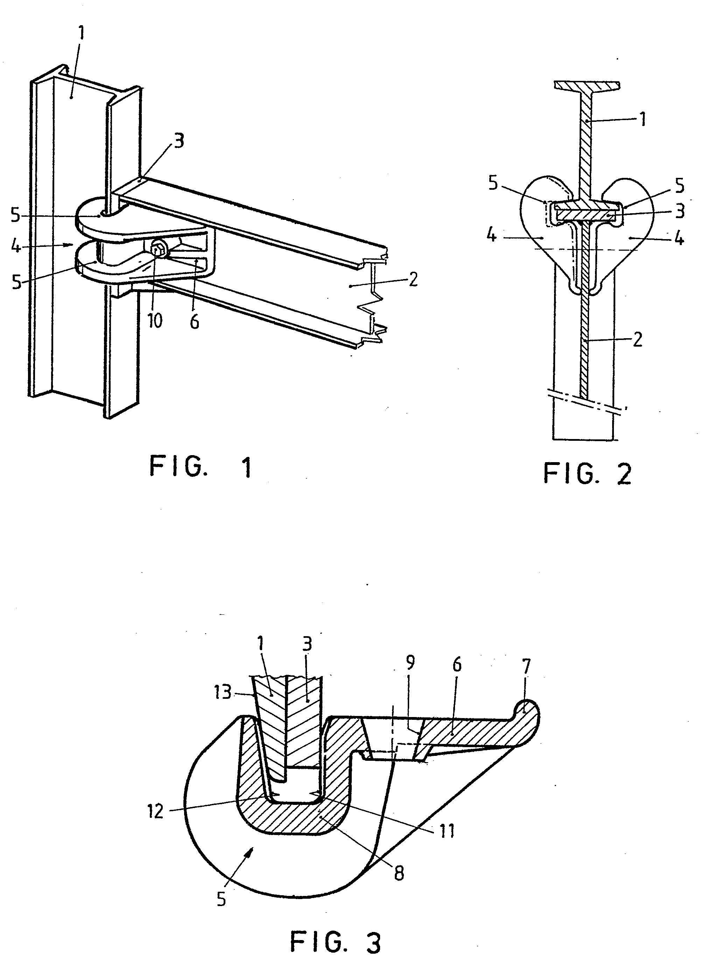

Fig. 1 shows an upright 1 shaped as an I-section, to which a supporting arm 2 likewise shaped as an I-section, is secured by means of the clamp according to the invention.

The supporting arm 2 may also be a T-section. A plate 3 is welded to the supporting arm and facing the upright and is welded perpendicular to the web of the supporting arm. Said plate extends

0166035

through the complete height of the supporting arm and along the widths of its flanges.

Further in figure 1 one clamp·part 4 is visible, the corresponding identical clamp part 4 of the clamp being situated at the back side of the supporting arm and the upright and is not shown in figure 1.

In the plan view of figure 2 both clamp parts 4 are visible.

Each clamp part 4 has a mouth 5 engaging around an upright flange and around the plate 3 of the supporting arm. Both mouhts 5 extend perpendicular to a base plate 6 of the clamp, said plate being provided at the end remote from the mouth with an increased edge or embossment 7 extending perpendicular to the upright. Both mouths 5 are mutually connected through a ridge 8 extending substantially in correspondence with the mouth contour, however, said ridge does not enter into engagement with the upright' and the plate 3.

A continuous screw hole 9 is provided in the base plate 6 for passing through it a screw 10, visible in figure 1, said screw extending through a hole (not shown) in the supporting arm and through the clamp part at the back side of the supporting arm, a nut (not shown) being threaded on the screw end projecting beyong said back clamp part in order to secure the clamp and thereby the supporting arm to the upright.

In the embodiment shown each clamp part is a cast work piece. It appears from figure 3 that each mouth portion 5 or jaw of a clamp part (in figure 3 the lower jaw portion of a clamp part is visible) has an inner wall 5 which extends perpendicular to the base plate 6 and an inner wall 12 which extends obliquely inclined relative to the wall 11 with an inclination corresponding to that of the flange surface 13 of the upright facing its web. Said inclination is for standard I-sections 14%, that is an inclination angle of about $8,5^{\circ}$.

If now the supporting arm 2 is placed at the desired height with its plate 3 in engagement with the upright 1 and the two parts of a clamp 4 are placed with their base plates 6 in engagement with the supporting arm web and with the mouth jaws 5 engaging around the upright flange at both sides thereof and thereafter the screw 10 is tightened through the nut (not shown), a force is generated perpendicular to the engaging surfaces of the clamp jaws with the flange, said force being, as has been said above, substantially seven times the tension force in the screw.

It is advantageous if each clamp part has two jaw portions 5 shaped as reinforcement ribs, which are mutually spaced such that the pressure per unity of surface on the engagement surfaces increases and thereby likewise the friction force increases.

One or both of the inner wall surfaces 11, 12 of the clamp jaw portions may be provided with grooves, e.g. having a depth of 1 mm.

If, after the nut has been tightened, a hammer blow is given on both clamp parts, this results in that due to the shock effect, both clamp parts are clamped still more securely around the upright.

C L A I M S

1. A rack clamp for stepwise adjustable securing supporting arms to uprights for cantilever racks, said clamp comprising two identical parts, each having a mouth engaging around a flange of the upright at both sides of the flange and at equal vertical height, said parts being mutually connectable and connectable to the supporting arm by means of a screw extending through corresponding holes in the clamp parts and the supporting arm, and a nut, characterized in that the upright (1) is an I-section and the supporting arm (2) is provided at its end facing the upright with a plate (3), which is parallel to the upright flange, said plate being placed against said flange, the mouth (5) engaging also around said plate and being in engagement therewith, the inner walls (11, 12) of the mouth extending in correspondence with the inner wall (13) of the upright flange and with the wall of the plate (3), i.e. at the flange side under an angle of about $8,5^{\circ}$ with the inner wall at the side of the plate.

2. A rack clamp according to claim 1, characterized in that each clamp part (4) is provided at the end of the surface (6), which faces the supporting arm (2) when the clamp is mounted, opposite to the end where the mouth jaws (5) are provided, with an embossment or ridge (7) adapted to engage with the supporting arm.

3. A rack clamp according to claim 2, characterized in that each clamp part (4) comprises two identical mouth or jaw portio: (5), having a mutual spacing which is substantially equal to the heig of the supporting arm (2) and between which the screw hole (3) is provided.

4. A rack clamp according to one or more of the preceding claims, characterized in that parallel grooves are provided in one or both inner walls (11, 12) of the jaws of a clamp part (4).

----------

1/1       0166035

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | NL-A-6 709 624 (HOVUMA) <br> * Page 3, line 4 - page 4, line 5; figure 3 * | 1 | F 16 B 2/10 |
| | --- | | |
| D,A | US-A-2 719 692 (GREDELL) | 1 | |
| | --- | | |
| D,A | DE-C- 341 604 (HOLLWEG) | 1 | |
| | ----- | | |

TECHNICAL FIELDS
SEARCHED (Int. Cl.4)

A 47 B
F 16 B

The present search report has been drawn up for all claims

| Place of search <br> THE HAGUE | Date of completion of the search <br> 26-03-1985 | Examiner <br> VAN DER WAL W |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82